# EUROPEAN PATENT SPECIFICATION

(11) **EP 2 768 253 B1**
(45) Date of publication and mention of the grant of the patent: **29.08.2018**
(21) Application number: 13290031.7
(22) Date of filing: 18.02.2013
(51) Int. Cl.: H04W 16/28, H04W 16/20

(54) **An indicating apparatus configured to project a visual light pattern indicative of radio coverage field, a radio transceiver and a method of mounting a radio transceiver**
Anzeigevorrichtung zur Projektion eines visuellen Lichtmusters zur Anzeige eines Funkabdeckungsfelds, Funksendeempfangsgerät und Verfahren zur Montage eines Funksendeempfangsgeräts
Dispositif indicateur conçu pour projeter un motif lumineux visuel indicatif de champ de couverture radio, émetteur-récepteur radio et procédé de montage d'un émetteur-récepteur radio

(43) Date of publication of application: 20.08.2014
(73) Proprietor: Alcatel Lucent, 91620 Nozay (FR)
(72) Inventor: Ho, Lester Tse Wee, Blanchardstown, Dublin 15 (IE); Lopez-Perez, David, Blanchardstown, Dublin 15 (IE)
(74) Representative: Nokia EPO representatives

(56) References cited:
- EP-A1- 1 684 376
- US-A1- 2007 063 911
- US-A1- 2009 063 121
- US-B1- 6 490 439

## Description

### Field of the Invention

The present invention relates to telecommunications, in particular to wireless telecommunications.

### Description of the Related Art

Wireless telecommunications systems are well-known. Many such systems are cellular, in that radio coverage is provided by a bundle of radio coverage areas known as cells. A base station that provides radio coverage is located in each cell. Traditional base stations provide coverage in relatively large geographic areas and the corresponding cells arc often referred to as macrocells.

It is possible to establish smaller sized cells within a macroccll. Cells that are smaller than macrocclls are sometimes referred to as small cells.

Small cells are lower-cost lower-power base stations used to enhance the capacity of a wireless cellular telecommunications networks. Small cells such as femtocells, which have a radio coverage range of tens of metres, and metrocells, which have a radio coverage area of hundreds of metres, are deployed in a heterogeneous network to provide high capacity in user 'hotspot' areas by so-called 'spatial reuse'. Spatial reuse is where the finite cellular radio resources, such as frequency channels, are reused by cellular base stations at different locations in a network in order to provide coverage and capacity over a wide area. Relying on the spatial separation between the base stations, conflicts due to using the same resources are avoided. Small cells, due to their smaller coverage area, are able to provide higher spatial reuse, and consequently higher capacity, in user hotspot areas where there are high concentration of users. In general, the smaller the cell base stations that are deployed in an area, the higher is the capacity. The trend of shifting towards smaller base stations is continuing as it has been realised that base stations providing cells of less than ten metres allow a higher traffic capacity to be handled with good quality of service. We refer to small cell base stations providing cells of less than ten metres as attocells.

Alternative known solutions that provide coverage of less than ten metres include low-power wireless access technologies such as Wireless Local Area Network (WLAN) and Bluetooth access points (APs) and femtocells base stations when operating at low power. The known approach involves antennas directed to radiate signals azimuthally, in other words in a substantially horizontal axis, regardless whether using omni-directional antennas or directional antennas. Furthermore, the coverage area of a particular antenna is often difficult to predict.

United States Patent US 6490439B1 provides technological background.

### Summary

The reader is referred to the appended independent claims. Some preferred features are laid out in the dependent claims.

An example of the present invention is an indicating apparatus configured to be positioned at a location and to project a visual light pattern indicative of the radio coverage field of a corresponding directional antenna of a radio transceiver unit positioned at that location or to be positioned at that location.

Preferably, the indicating apparatus comprises a plurality of laser pointers, each of the laser pointers providing a visual light indication of extent of the radio coverage field. Preferably, the indicated extent of the radio coverage field is where the received pilot signal power from the attocell is higher than that of other base stations, or where the Signal to Interference plus Noise Ratio (SINR) is practically zero. For example, in Universal Mobile Telecommunication System (UMTS), the pilot signal power used is the Received Signal Code Power (RSCP), and in Long Term Evolution (LTE), the pilot signal power used is the Reference Signal Received Power (RSRP). Preferably, the angles of the directional axes of the lasers relative to the central access of the radio coverage field are adjustable dependent on the radio coverage field.

In preferred embodiments, the radio coverage of a small ceiling-mounted indoor cellular base station is indicated using the visual light pattern.

In preferred embodiments, light projection is used to provide a visual guide to a person deploying an attocell base station, be it an engineer or end user, as to where the coverage of the attocell will be.

In some preferred embodiments, an attocell coverage indication apparatus is provided that makes use of laser pointers with beams that are aligned at specific angles to the main radio beam of the antenna; in this way the laser pointers may provide visual representation of the effective coverage area of the main radio beam of the attocell base station.

In some embodiments the laser pointers are in an apparatus placed in the location where the antenna would be deployed. In some other embodiments, in the apparatus the laser pointers arc embedded in the attocell base station itself. The person may use the apparatus to confirm that the antenna beam of the attocell base station will cover the intended area, and make any required adjustments to the location of attocell base station. For example, the apparatus may show that the coverage area is such that where neighbouring attocells would have coverage areas that overlap. The person using the apparatus may then make adjustments to ensure that the attocells do not significantly overlap in their coverage areas so avoiding high interference between attocells.

Some preferred embodiments provide a simple way of helping people who deploy attocells to visualise their coverage area, where the attocells are low power cellular base stations mounted on ceilings and using downwards facing antennas. Some preferred embodiments provide an indicating apparatus that is simple to use and helps reduce sub-optimal deployments of base stations that can affect the performance of the network.

The present invention also relates to a radio transceiver unit comprising a directional antenna and the indicating apparatus.

The present invention also relates to a method of mounting a radio transceiver unit having a directional antenna by the steps of: positioning an indicating apparatus at a first location on a ceiling, the indicating apparatus being configured to project a visual light pattern indicative of the radio coverage field of the directional antenna of the radio transceiver unit; comparing the visual light pattern to a desired coverage area; shifting the indicating apparatus to a second location on the ceiling where the visual light pattern is aligned with the desired coverage area; and mounting the radio transceiver unit at that second location on the ceiling.

### Brief Description of the Drawings

Embodiments of the present invention will now be described by way of example and with reference to the drawings, in which:
Figure 1 is a diagram illustrating a front view of an attocell in place on a ceiling according to a first embodiment of the present invention,
Figure 2 is a diagram illustrating an example of the antenna gain pattern (of the attocell shown in Figure 1,
Figure 3 is a contour diagram illustrating an end on view of the antenna gain pattern of the attocell shown in Figure 1,
Figure 4 is a front view of an attocell coverage indicator according to the first embodiment of the invention,
Figure 5 is a front view of the attocell coverage indicator shown in Figure 4, in use at a first position on the ceiling,
Figure 6 is a front view of the attocell coverage indicator shown in Figure 4, in use at a second position on the ceiling,
Figure 7 is a front view of the attocell shown in Figure 1 mounted at the second position on the ceiling, and
Figure 8 is a front view of an attocell including integrated attocell coverage indicator according to a second embodiment of the present invention.

### Detailed Description

Attocells are principally intended to be deployed indoors, to provide coverage to basically static users, over a coverage area of up to 10 metres diameter. Typically attocells use very low transmit power, for example 1 to 10 milliwatts. Attocells typically use directional antennas so as to reduce intercell interference as attocells are often densely deployed. The directional antennas are ceiling-mounted with their main antenna beam pointing vertically downwards.

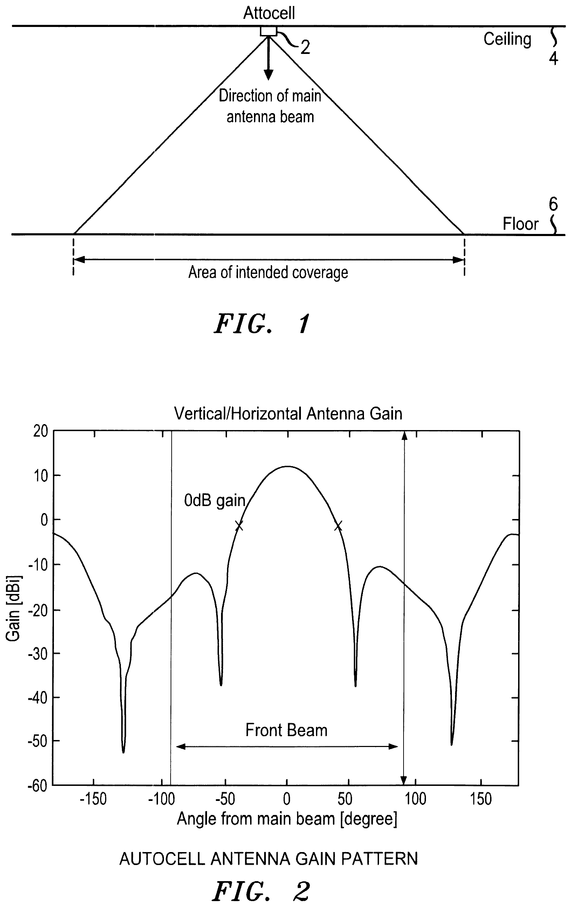

As shown in Figure 1, an attocell 2 is mounted on a ceiling 4 with its main antenna beam pointing vertically downwards towards the floor 6. In this way, line-of-sight, or near line-of sight coverage is provided over the small targeted area, while intercell interference outside this area is reduced.

As shown in Figure 2, the antenna has a gain of OdB at an angle of 38 degrees from the central longitudinal axis of the main beam. At higher angles the gain falls off fairly steeply, producing nulls in the antenna beam.

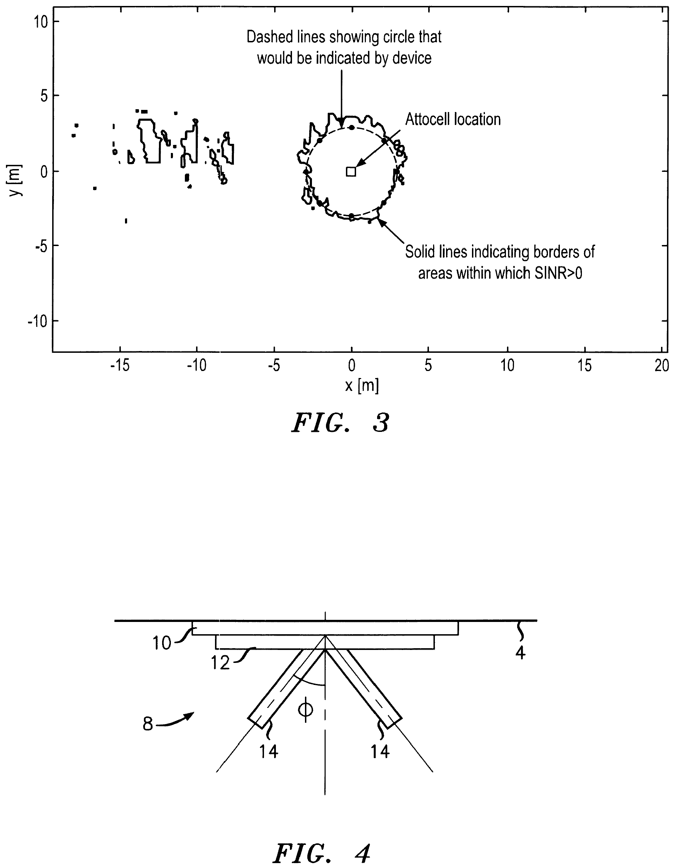

As shown in Figure 3, as expected the antenna gain pattern on the floor (in the X-Y plane) show a substantially circular area in which the Signal to Interference noise ratio is greater than zero. The attocell is mounted on the ceiling but its X-Y location is shown in Figure 3 for reference.

The inventor realised that given the large number of attocells used in typical dense attocell deployments, attocells should be positioned on the ceiling in an easy plug-and-play manner. The inventor realised that as the coverage area of an attocell depends on the then nature of the beam width of its antenna and the height of the ceiling above the floor, it is difficult for the person deploying the attocell to predict the actual attocell coverage area. This can cause attocclls to be located in the wrong place resulting in failure to cover the whole intended coverage area or high interference to neighbouring attocells caused by excessive attocell coverage area overlap.

The question arises of where on the ceiling to locate the attocell. To this end a separate attocell coverage indicator as shown in Figure 4 is used.

As shown in Figure 4, the attocell coverage indicator 8 includes a support plate 10 for temporary fixture or abutment against the ceiling 4, a main body 12 and multiple laser pointers 14 (two in this example). The laser pointers 14 are set to an angle Φ from the perpendicular. The angle Φ is selected in view of the attocell antenna gain pattern. In this example see Figure 2, angle Φ is set as 38 degrees.

In this example the attocell coverage indicator 8 used fixed angles for the laser pointers. This attocell coverage indicator 8 is specific to the antenna pattern and transmit power of the attocell that the indicator 8 is seeking to show the coverage of.

### Use of the attocell coverage indicator

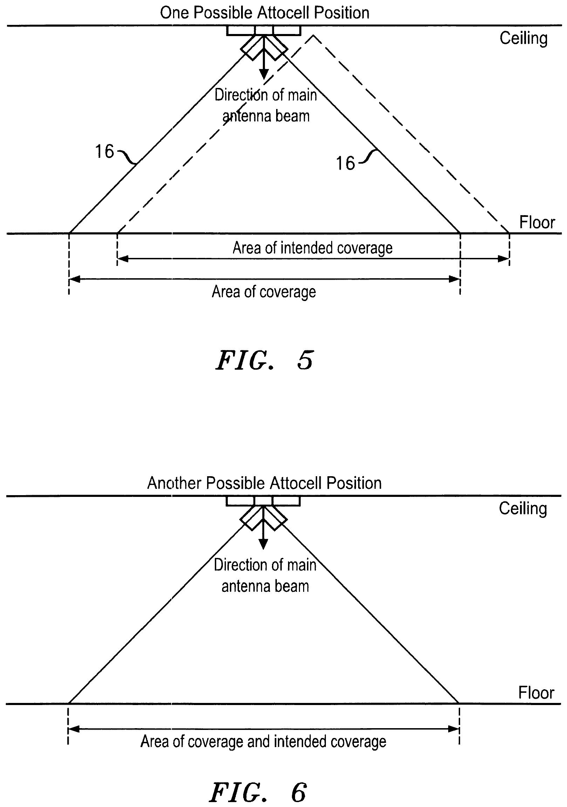

As shown in Figure 5, the attocell coverage indicator 8 is in use at a first position on the ceiling. The coverage indicated by the laser beams 16 from the laser pointers 14 on the floor is displaced from the desired area of radio coverage of the floor that the person (not shown) deploying an attocell has selected.

According the attocell coverage indicator 8 is moved manually by that person across the ceiling until the area indicated by the laser beams 16 matches the desired coverage area. This is shown in Figure 6. The attocell coverage indicator 8 is now at a second position on the ceiling.

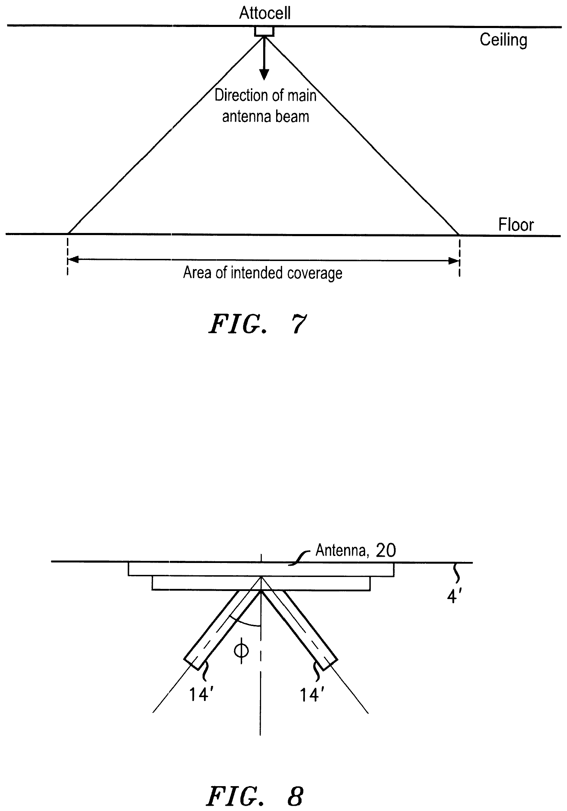

As shown in Figure 7, the attocell coverage indicator 8 is then removed and the attocell 2 is mounted at that second position on the ceiling.

### Alternative Embodiments

In some alternative embodiments, laser pointers arc integrated directly into the attocell itself rather than being part of a standalone coverage indicator. An example is shown in Figure 8.

As shown in Figure 8, an attocell 2' includes an antenna 20 that in use abuts the ceiling 4', a main body 12' and multiple laser pointers 14' of which there are two in this example. The antenna 20, main body 12' and laser pointers 14' are integrated together. The laser pointers 14' are set to an angle Φ from the perpendicular. The angle Φ is selected in view of the attocell antenna gain pattern. In this example, angle Φ is set as 38 degrees.

In some embodiments, for example where the laser pointers are integrated into the attocell, the antenna beam pattern is modifiable, for example through the use of electronic beamforming and/or adjustments to reflectors. In some embodiments, the angle of the laser points is adjustable. For example in some embodiments in which the antenna beam pattern is modifiable, the angles of the laser pointers are adjusted automatically in tandem to show the effects of the antenna beam pattern change.

In some embodiments the angles of the laser pointers are manually adjustable, although this requires the person performing the adjustment to have knowledge of the attocell's antenna and transmit power. The person could be a trained engineer or an end user with instructions on which angles to use described to him in an instruction manual.

In some embodiments instead of laser pointers, other type of pointers are used instead, for example other light generating pointers.

Some embodiments relate to cellular wireless telecommunications base stations, for example where attocells are cellular (LTE, UMTS etc). Some other embodiments relate to wireless telecommunications stations that arc non-cellular (e.g. WLAN).

Some embodiments relate to metrocells, for example mounted on street lamps or the roof of stadium stands and providing radio coverage pointing downwards. In some metrocell examples the indicating apparatus is integrated with the antenna of the metrocell, and the indicated area and the radio coverage area are altered in tandem. Specifically, the antenna beam is modifiable by electronic beamforming and, for example, laser pointer angles are adjusted in tandem to indicate the modified radio coverage area.

### General

The present invention may be embodied in other specific forms without departing from its essential characteristics. The described embodiments are to be considered in all respects only as illustrative and not restrictive. The scope of the invention is, therefore, indicated by the appended claims rather than by the foregoing description. All changes that come within the meaning and range of equivalency of the claims are to be embraced within their scope.

A person skilled in the art would readily recognize that steps of various above-described methods can be performed by programmed computers. Some embodiments relate to program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. Some embodiments involve computers programmed to perform said steps of the above-described methods.

## Claims

1. An indicating apparatus (8) configured to be positioned at a location and to project a visual light pattern indicative of the radio coverage field of a corresponding directional antenna of a radio transceiver unit positioned at that location or to be positioned at that location.

2. An indicating apparatus according to claim 1, comprising a plurality of laser pointers (14), each of the laser pointers (14) providing a visual light indication (16) of extent of the radio coverage field.

3. An indicating apparatus according to claim 2, in which the indicated extent of the radio coverage field is where the Signal to Interference Noise Ratio becomes practically zero.

4. An indicating apparatus according to any preceding claim, configured to be suspended from a ceiling (4) in a downwards direction so as to indicate the radio coverage field as a pattern of spots of light on a floor.

5. An indicating apparatus according to any preceding claim, comprising laser pointers (14'), in which the angles of the directional axes of the laser pointers relative to the central access of the radio coverage field are adjustable dependent on the radio coverage field.

6. An indicating apparatus according to claim 5, in which the angles of the directions of the laser pointers are adjusted automatically in tandem with adjustment of a radio coverage field.

7. An indicating apparatus according to any preceding claim, in which the corresponding directional antenna of a radio transceiver unit is the directional antenna of a small cell base station (2).

8. An indicating apparatus according to claim 7, in which the indicated coverage of the radio coverage field is where the received pilot signal power from the small cell (2) is higher than that from neighbouring base stations.

9. An indicating apparatus according to any preceding claim, which indicates the radio coverage area that the corresponding radio transceiver would provide upon being positioned at the location where the indicating apparatus was when in use.

10. A radio transceiver unit comprising a directional antenna (20) and the indicating apparatus (14') according to any of claims 1 to 8.

11. A radio transceiver unit according to claim 10, which is a small cell base station configured to be mounted with its directional antenna pointed downwards.

12. A radio transceiver unit according to claim 10 or claim 11, which is an attocell base station configured to be mounted on a ceiling (4') with its directional antenna pointed downwards towards the floor.

13. A method of mounting a radio transceiver unit (2) having a directional antenna by the steps of:
positioning an indicating apparatus (8) at a first location on a ceiling (4), the indicating apparatus being configured to project a visual light pattern (16) indicative of the radio coverage field of the directional antenna of the radio transceiver unit;
comparing the visual light pattern to a desired coverage area;
shifting the indicating apparatus (8) to a second location on the ceiling (4) where the visual light pattern is aligned with the desired coverage area;
mounting the radio transceiver unit at that second location on the ceiling (4).

14. A method according to claim 13, in which the radio transceiver unit is an attocell base station.

## Patentansprüche

1. Anzeigevorrichtung (8), die konfiguriert ist zum Positionieren an einem Ort und zum Projizieren eines visuellen Lichtmusters, das indikativ ist für das Funkabdeckungsfeld einer entsprechenden Richtantenne einer Funktransceivereinheit, die an dem Ort lokalisiert ist oder die an diesem Ort zu positionieren ist.

2. Anzeigevorrichtung nach Anspruch 1, umfassend eine Vielzahl von Laserpointern (14), wobei jeder der Laserpointer (14) eine visuelle Lichtanzeige (16) des Umfangs des Funkabdeckungsfeldes bereitstellt.

3. Anzeigevorrichtung nach Anspruch 2, in welcher der angezeigte Umfang des Funkabdeckungsfeldes dort zu finden ist, wo das Signal-zu-Interferenz- und Rauschverhältnis praktisch null wird.

4. Anzeigevorrichtung nach einem beliebigen der vorhergehenden Ansprüche, die konfiguriert ist zum Abhängen von einer Decke (4) nach unten, um das Funkabdeckungsfeld als Muster von Lichtpunkten auf einem Boden anzuzeigen.

5. Anzeigevorrichtung nach einem beliebigen der vorhergehenden Ansprüche, umfassend Laserpointer (14'), in denen die Winkel der Richtungsachsen der Laserpointer relativ zum zentralen Zugang des Funkabdeckungsfeldes einstellbar sind in Abhängigkeit vom Funkabdeckungsfeld.

6. Anzeigevorrichtung nach Anspruch 5, in welcher die Winkel der Richtungen der Laserpointer automatisch zusammen mit der Einstellung eines Funkabdeckungsfeldes eingestellt werden.

7. Anzeigevorrichtung nach einem beliebigen der vorhergehenden Ansprüche, in welcher die entsprechende Richtantenne einer Funktransceivereinheit die Richtantenne einer Station auf Basis kleiner Zellen (2) ist.

8. Anzeigevorrichtung nach Anspruch 7, in welcher die angezeigte Abdeckung des Funkabdeckungsfeldes dort ist, wo die empfangene Pilotsignalleistung von der kleinen Zelle (2) höher ist als die von den benachbarten Basisstationen.

9. Anzeigevorrichtung nach einem beliebigen der vorhergehenden Ansprüche, welche den Funkabdeckungsbereich anzeigt, den der entsprechende Funktransceiver bereitstellen würde, wenn er an dem Ort positioniert würde, an dem sich die Anzeigevorrichtung befand als sie in Gebrauch war.

10. Funktransceivereinheit, umfassend eine Richtantenne (20) und die Anzeigevorrichtung (14') nach einem beliebigen der Ansprüche 1 bis 8.

11. Funktransceivereinheit nach Anspruch 10, welche eine Station auf Basis kleiner Zellen ist, die konfiguriert ist für die Montage mit nach unten ausgerichteter Richtantenne.

12. Funktransceivereinheit nach Anspruch 10 oder 11, bei welcher es sich um eine Attocell-Basisstation handelt, die konfiguriert ist für die Montage an einer Decke (4'), wobei ihre Richtantenne nach unten in Richtung Boden ausgerichtet ist.

13. Verfahren der Montage einer Funktransceivereinheit (2) mit einer Richtantenne mit den folgenden Schritten:
Positionieren einer Anzeigevorrichtung (8) an einem ersten Ort an einer Decke (4), wobei die Anzeigevorrichtung konfiguriert ist zum Projizieren eines visuellen Lichtmusters (16), das indikativ ist für das Funkabdeckungsfeld der Richtantenne der Funktransceivereinheit;
Vergleichen des visuellen Lichtmusters mit dem gewünschten Abdeckungsbereich;
Verschieben der Anzeigevorrichtung (8) an einen zweiten Ort an der Decke (4), wo das visuelle Lichtmuster ausgerichtet ist mit dem gewünschten Abdeckungsbereich;
Montage der Funktransceivereinheit an dem zweiten Ort an der Decke (4).

14. Verfahren nach Anspruch 13, in welchem die Funktransceivereinheit eine Attocell-Basisstation ist.

## Revendications

1. Appareil indicateur (8) configuré pour être positionné à un certain emplacement et pour projeter un motif lumineux visuel indiquant le champ de couverture radio d'une antenne directionnelle correspondante d'une unité émettrice/réceptrice radio positionnée à cet emplacement ou devant être positionnée à cet emplacement.

2. Appareil indicateur selon la revendication 1, comprenant une pluralité de pointeurs laser (14), chacun des pointeurs laser (14) fournissant une indication lumineuse visuelle (16) de l'étendue du champ de couverture radio.

3. Appareil indicateur selon la revendication 2, dans lequel l'étendue indiquée du champ de couverture radio est l'emplacement où le rapport signal sur bruit d'interférence devient pratiquement nul.

4. Appareil indicateur selon l'une quelconque des revendications précédentes, configuré pour être suspendu d'un plafond (4) dans une direction vers le bas afin d'indiquer le champ de couverture radio comme un motif de points de lumière sur un sol.

5. Appareil indicateur selon l'une quelconque des revendications précédentes, comprenant des pointeurs laser (14'), dans lequel les angles des axes directionnels des pointeurs laser par rapport à l'accès central du champ de couverture radio peuvent être ajustés en fonction du champ de couverture radio.

6. Appareil indicateur selon la revendication 5, dans lequel les angles des directions des pointeurs laser sont ajustés automatiquement conjointement à l'ajustement d'un champ de couverture radio.

7. Appareil indicateur selon l'une quelconque des revendications précédentes, dans lequel l'antenne directionnelle correspondante d'une unité émettrice/réceptrice radio est l'antenne directionnelle d'une station de base à petites cellules (2).

8. Appareil indicateur selon la revendication 7, dans lequel la couverture indiquée du champ de couverture radio est l'emplacement où la puissance de signal pilote reçue provenant de la petite cellule (2) est supérieure à celle de stations de base voisines.

9. Appareil indicateur selon l'une quelconque des revendications précédentes, qui indique la zone de couverture radio que l'émetteur/récepteur radio correspondant fournirait lors de son positionnement à l'emplacement où l'appareil indicateur était situé au moment de son utilisation.

10. Unité émettrice/réceptrice radio comprenant une antenne directionnelle (20) et l'appareil indicateur (14') selon l'une quelconque des revendications 1 à 8.

11. Unité émettrice/réceptrice radio selon la revendication 10, qui est une station de base à petites cellules configurée pour être montée avec son antenne directionnelle pointée vers le bas.

12. Unité émettrice/réceptrice radio selon la revendication 10 ou la revendication 11, qui est une station de base à attocells configurée pour être montée sur un plafond (4') avec son antenne directionnelle pointée vers le bas en direction du sol.

13. Procédé de montage d'une unité émettrice/réceptrice radio (2) ayant une antenne directionnelle **caractérisé par** les étapes suivantes :
positionner un appareil indicateur (8) à un premier emplacement sur un plafond (4), l'appareil indicateur étant configuré pour projeter un motif lumineux visuel (16) indiquant le champ de couverture radio de l'antenne directionnelle de l'unité émettrice/réceptrice radio ;
comparer le motif lumineux visuel à une zone de couverture souhaitée ;
déplacer l'appareil indicateur (8) vers un second emplacement sur le plafond (4) où le motif lumineux visuel est aligné avec la zone de couverture souhaitée ;
monter l'unité émettrice/réceptrice radio au niveau de ce second emplacement sur le plafond (4).

14. Procédé selon la revendication 13, dans lequel l'unité émettrice/réceptrice radio est une station de base à attocells.
